(19) Europäisches Patentamt
European Patent Office
Office européen des brevets

(11) **EP 4 039 725 A1**

(12) **EUROPÄISCHE PATENTANMELDUNG**

(43) Veröffentlichungstag:
**10.08.2022 Patentblatt 2022/32**

(21) Anmeldenummer: **21155431.6**

(22) Anmeldetag: **05.02.2021**

(51) Internationale Patentklassifikation (IPC):
**C08G 64/30** [(2006.01)]   **C08G 65/26** [(2006.01)]

(52) Gemeinsame Patentklassifikation (CPC):
**C08G 64/30;** C08G 65/2603

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
• **Wolf, Aurel**
**42489 Wülfrath (DE)**

• **Schuetze, Mike**
**51379 Leverkusen (DE)**
• **Sebastian, Marina**
**53507 Dernau (DE)**
• **Guertler, Christoph**
**50735 Köln (DE)**

(74) Vertreter: **Levpat**
**c/o Covestro AG**
**Gebäude 4825**
**51365 Leverkusen (DE)**

(54) **VERFAHREN ZUR HERSTELLUNG VON POLYETHERCARBONATALKOHOLEN**

(57) Gegenstand der Erfindung ist ein Verfahren zur Herstellung von Polyethercarbonatalkoholen durch Anlagerung von cyclischen Carbonaten an eine H-funktionelle Starterfunktion in Anwesenheit eines Katalysators gemäß der Formel

$$M_nX \qquad (I),$$

wobei

M ausgewählt ist aus den Alkalimetallkationen $Li^+$, $Na^+$, $K^+$ und $Cs^+$,

X ausgewählt ist aus den Anionen $SnO_3^{2-}$, $CO_3^{2-}$, $PO_4^{3-}$, $RCOO^-$, $VO_3^-$, $WO_4^{2-}$, $MoO_4^{2-}$ und $VO_4^{3-}$,

n ist 1, wenn X = $VO_3^-$, $RCOO^-$

n ist 2, wenn X = $SnO_3^{2-}$, $CO_3^{2-}$, $WO_4^{2-}$ oder $MoO_4^{2-}$

n ist 3, wenn X = $PO_4^{3-}$ oder $VO_4^{3-}$,

R ein organischer Rest ist, bevorzugt C1 bis C12-Alkylrest,

dadurch gekennzeichnet, dass die Anlagerung in einem Rohrreaktor durchgeführt wird.

**Beschreibung**

Die vorliegende Erfindung betrifft ein Verfahren zur Herstellung von Polyethercarbonatalkoholen, bevorzugt Polyethercarbonatpolyolen, durch katalytische Anlagerung cyclischer Carbonate an eine H-funktionelle Startersubstanz unter Verwendung eines Rohrreaktors.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572) durchgeführt.

Ebenfalls offenbart ist der Einsatz von Katalysatoren wie beispielsweise $Na_3VO_4$ und $Na_2WO_4$ für die Anlagerung cyclischen Ethylencarbonats an H-funktionellen Startersubstanzen (R.F. Harris, Journal of Applied Polymer Science, 1989, 37, 183-200, EP19192407.5 und EP19192409.1). Diese Anlagerung erfolgt nach dem Prinzip einer ringöffnenden Polymerisation (auch ROP genannt) wobei Anteile des im cyclischen Carbonat gebundenen $CO_2$ bei der Polymerisation entweichen. Verfahren mit diesen Katalysatoren führen dementsprechend nicht zu Polycarbonatpolyolen, sondern zu Polyethercarbonatpolyolen. Die Polyethercarbonatpolyole wurden dabei in einer Batch-Fahrweise hergestellt.

Unter einer Batch-Fahrweise im Sinne dieser Erfindung wird verstanden, dass sämtliche Edukte, also cyclisches Carbonat und H-funktionelle Startersubstanz vor Beginn der Reaktion in den Reaktor eingebracht werden. Im Rahmen dieser Erfindung wird unter einer Semibatch-Fahrweise verstanden, dass wenigstens einer der zuvor genannten Stoffe über einen gewissen Zeitraum dem Reaktor zugeführt wird. Ein grundsätzlicher Nachteil eines Semi-Batch- oder Batch-Verfahrens besteht darin, dass zur Produktentnahme das Verfahren gestoppt werden muss und daher ein Zeitverlust resultiert.

Aufgabe der vorliegenden Erfindung war die Bereitstellung eines Verfahrens zur kontinuierlichen Herstellung, d.h. mit einer kontinuierlichen Entnahme des Produkts ohne das Verfahren zu stoppen, von Polyethercarbonatalkoholen mit hohem Anteil an Carbonatgruppen im Polyethercarbonatalkohol.

Überraschend wurde gefunden, dass die technische Aufgabe gelöst wird durch ein Verfahren zur Herstellung von Polyethercarbonatalkoholen durch Anlagerung von cyclischen Carbonaten an eine H-funktionelle Starterfunktion in Anwesenheit eines Katalysators gemäß der Formel

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $SnO_3^{2-}$, $CO_3^{2-}$, $PO_4^{3-}$, $RCOO^-$, $VO_3^-$, $WO_4^{2-}$, $MoO_4^{2-}$ und $VO_4^{3-}$,
n ist 1, wenn X = $VO_3^-$, $RCOO^-$
n ist 2, wenn X = $SnO_3^{2-}$, $CO_3^{2-}$, $WO_4^{2-}$ oder $MoO_4^{2-}$
n ist 3, wenn X = $PO_4^{3-}$ oder $VO_4^{3-}$,
R ein organischer Rest ist, bevorzugt Cl bis C12-Alkylrest,

dadurch gekennzeichnet, dass die Anlagerung in einem Rohrreaktor durchgeführt wird.

Der Rohrreaktor im Sinne der Erfindung weist im Allgemeinen ein Verhältnis von Rohrlänge L zu Rohrdurchmesser dR von L / dR > 50 auf und ist vorzugsweise frei von mehreren, parallel übereinander angeordneten Lagen, die gegebenenfalls mikrostrukturiert sind, dergestalt, dass jede Lage eine Vielzahl von parallel zueinander angeordneten Kanälen aufweist, die von einer Seite der Platte bis zur gegenüberliegenden Seite derselben einen durchgehenden Strömungsweg ausbilden.

In einer bevorzugten Ausführungsform erfolgt die Anlagerung des cyclischen Carbonats an eine H-funktionelle Startersubstanz gemäß den folgenden Schritten:

(i) der Katalysator wird in H-funktioneller Startersubstanz und cyclischen Carbonat suspendiert,
(ii) die aus (i) resultierende Suspension wird in einem Rohrreaktor bei einer Temperatur von 140 bis 200°C zur Reaktion gebracht.

Die Suspension in Schritt (i) kann in einem oder mehrere Schritten erfolgen. So kann beispielsweise in einem Schritt (i-1) Katalysator und H-funktionelle Startersubstanz in einen ersten Mischer überführt und vermischt werden. In einem anschließenden Schritt (i-2) kann das cyclische Carbonat in den ersten Mischer überführt werden oder das cyclische Carbonat und das Gemisch aus Schritt (i-1) werden separat in einen zweiten Mischer überführt.

Schritt (i)) kann beispielsweise bei einer Temperatur von 5 bis 80 °C durchgeführt werden. Die Temperatur sollte dabei so gewählt sein, dass die Carbonate flüssig vorliegen. Dadurch wird erreicht, dass aufgrund der relativ niedrigen Temperatur keine Polymerisation im Mischer einsetzt.

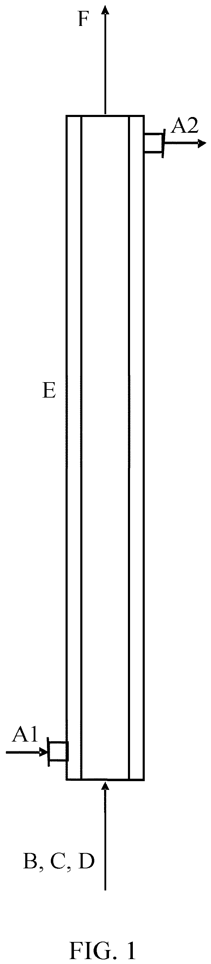

Bei dem Rohrreaktor handelt es sich beispielsweise um ein beheiztes Rohr. Eine mögliche Ausführungsform ist schematisch in FIG. 1 gezeigt. Hier ist der Rohrreaktor mit einem Kühl-/Heizmantelt versehen, wobei über einen Einlass (A1) bzw. Auslass (A2) eine Wärmeträgerflüssigkeit zur Temperierung geleitet wird. Je nach Reaktionsbereich und -durchführung kann der Kühl-/Heizmantel aus verschiedenen Heiz- und Kühlsegmenten bestehen (in FIG. 1 nicht dargestellt). Die Edukte, d.h. die aus Schritt (i) resultierende Mischung aus Katalysator (B), H-funktionelle Startersubstanz (C) und cyclisches Carbonat (D) werden kontinuierlich dem Rohrreaktor (E) an einem Ende (Einlass) zugeführt und das resultierende Produkt (F) (im wesentlichen Polyethercarbonatalkohol) wird kontinuierlich am anderen Ende des Rohrreaktors (Auslass) entnommen.

Die Zuführungen zu den Mischern bzw. zum Rohrreaktor sind vorzugsweise beheizbar, so dass auch feste bzw. hochviskose H-funktionellen Startersubstanzen oder cyclische Carbonate verwendet werden können.

Der Rohrreaktor wird bevorzugt aus rostfreiem Metall hergestellt, aber es ist ebenso möglich, dass auch andere Materialien verwendet werden können, solange das Material hinsichtlich Edukte/Produkte, Drücke usw. kompatibel ist.

Der Rohrreaktor kann entweder aus einem durchgängigen Stück Rohr oder aus mindestens zwei aneinandergefügten Rohren, beispielsweise auch mit unterschiedlichen Eigenschaften wie unterschiedlichem, inneren Durchmesser aufgebaut sein. Der innere Durchmesser des Rohrreaktors kann über die gesamte Länge gleich oder verschieden sein. Der innere Durchmesser des Rohrreaktors beträgt vorzugsweise von 1,1 mm bis 500 mm, bevorzugt 2 mm bis 250 mm, besonders bevorzugt 2 mm bis 150 mm. Beispielsweise ist ein erstes Teilstück des Rohrreaktors dünner als das zweite Teilstück. Die Teilstücke müssen dabei nicht zwei aneinandergefügte Rohre sein, sondern können auch Teilstücke eines durchgängigen Rohres sein. Dies hat den Vorteil, dass am Anfang des Rohrreaktors die Reaktionswärme durch das günstigere Verhältnis an Fläche / Volumen ein besserer Wärmeaustausch erreicht wird. Vorzugsweise weist der Rohrreaktor über die ersten 20 bis 60% seiner Länge einen inneren Durchmesser des Rohrreaktors von 1,1 mm bis < 150 mm auf (erstes Teilstück), und über die zweiten 80 bis 40 % seiner Länge einen inneren Durchmesser des Rohrreaktors von 150 mm bis 500 mm, vorzugsweise von 150 mm bis 400 mm auf (zweites Teilstück). Der Rohrreaktor kann Einbauten wie beispielsweise statische Mischer oder Kombination von statischen Mischern und Wärmetauschern (beispielsweise Kühlschlangen) enthalten.

Vorzugsweise werden gemäß des erfindungsgemäßen Verfahrens im Rohreaktor mittlere Verweilzeiten von 0,5 Minuten bis 6 Stunden, bevorzugt von 1 Minute bis 4 Stunden, besonders bevorzugt 5 Minuten bis 150 Minuten eingestellt. Die mittlere Verweilzeit lässt sich aus dem Verhältnis zwischen Volumenstrom und Reaktorvolumen bestimmen, wobei letzteres sich aus dem inneren Durchmesser des Rohres bzw. der Rohre und die Länge des Rohres bzw. die Länge der einzelnen Rohrabschnitte ergibt. Bei zu kurzen Verweilzeiten ist im allgemeinen der Umsatz unvollständig, und eine zu lange Verweilzeiten ist im allgemeinen nachteilig in Bezug auf die Raum-Zeit-Ausbeute, macht damit den Prozess weniger rentabel und wirkt sich gegebenenfalls negativ auf die Produktqualität aus.

Besteht der Reaktor aus mindestens zwei aneinandergefügten Rohren, so ist es möglich, diese auf unterschiedliche Temperaturen einzustellen (beispielsweise durch Beheizen oder Kühlen).

Es ist prinzipiell auch möglich, mehrere Zugabestellen entlang des Rohrreaktors zu haben, so dass an verschiedenen Stellen des Reaktors cyclisches Carbonat oder eine Mischung mehrerer cyclischer Carbonate und H-funktionelle Startersubstanzen bzw. eine Mischung von H-funktionellen Startersubstanzen zugegeben werden kann. Hierdurch ist es möglich, Block-Copolymere zu erzeugen.

Es ist von Vorteil, wenn das gesamte Volumen des Rohrreaktors mit Flüssigkeit/Suspension gefüllt ist. Optimalerweise ist diese Flüssigkeit bzw. Suspension bezüglich der Flüssigkeiten einphasig, um einen besonders guten Stoffaustausch zu gewährleisten.

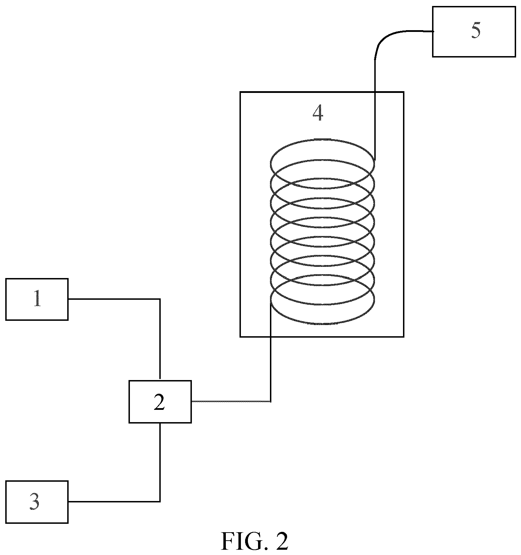

Ein schematischer Versuchsaufbau für eine bevorzugte Ausführungsform ist in FIG. 2 gezeigt. Aus dem gerührten Vorlagebehälter 1 wird eine Suspension bestehend aus H-funktioneller Startersubstanz und Katalysator mittels einer Pumpe zu einem Mischer 2 (beispielsweise ein Kaskadenmischer) gepumpt. Das cyclische Carbonat aus Vorlagebehälter 3 wird mittels einer Pumpe zum Mischer 2 gefördert. In Mischer 2 erfolgt eine Mischung bei einer Temperatur von 5 bis 100 °C, bevorzugt 10 bis 80 °C, wobei die resultierende Mischung noch nicht zur Reaktion kommt. Die Suspension wird aus dem Mischer 2 in Rohrreaktor 4 geleitet. Der Rohrreaktor ist auf eine Temperatur von 140 bis 200 °C, bevorzugt 150 bis 200 °C gebracht (vorzugsweise durch einen Wärmetauscher oder ein thermostatisierbares Ölbad), wobei die eigentliche Reaktion (d.h. die Anlagerung von cyclischen Carbonat an H-funktionelle Startersubstanz in Gegenwart des Katalysators) stattfindet. Das entstehende Produkt (Polyethercarbonatalkohol) wird im Behälter 5 gesammelt.

Als Mischer geeignet sind beispielsweise Split-Recombine-Mischern wie beispielsweise der "Kaskadenmischer 2S" der Firma Ehrfeld Mikrotechnik BTS GmbH. Diese Split-Recombine-Mischer zeichnen sich durch Stufen aus wiederkehrender Trennung und Zusammenführung von Strömen aus. Bei jeder dieser Stufen wird die Lamellenzahl sukzessive verdoppelt und dadurch Lamellendicke und Diffusionsweg halbiert. Die Vermischung kann auch im Rohr mittels Düsen oder Mischer mit bewegten, rotierenden Einbauten erfolgen.

Der Katalysator wird vorzugsweise in einer Menge eingesetzt, so dass der Gehalt an Katalysator im resultierenden Reaktionsprodukt 10 bis 50000 ppm, besonders bevorzugt 20 bis 40000 ppm und höchst bevorzugt 50 bis 30000 ppm beträgt.

In einer bevorzugten Ausführungsform wird in die Suspension aus H-funktioneller Startersubstanz, Katalysator und cyclischen Carbonats bei einer Temperatur von 20°C bis 120°C, besonders bevorzugt von 40°C bis 100°C Inertgas (beispielsweise Argon oder Stickstoff) eingeleitet.

Der Katalysator kann in fester Form oder als Suspension in cyclischem Carbonat, in H-funktioneller Startersubstanz oder in einer Mischung aus den genannten zugegeben werden.

In dem Verfahren können die cyclischen Carbonate einzeln oder als Gemische eingesetzt werden. Bevorzugt wird als cyclisches Carbonat cyclisches Propylencarbonat (cPC), cyclisches Ethylencarbonat (cEC) oder eine Mischung aus beiden eingesetzt.

_H-funktionelle Startersubstanz_

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH$_2$ (primäre Amine), -NH- (sekundäre Amine), -SH und -CO$_2$H, bevorzugt sind -OH, -NH$_2$ und -CO$_2$H, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C$_1$-C$_{24}$ Alkyl-Fettsäureester, die im Mittel mindestens 2 OH-Gruppen pro Molekül enthalten und Wasser, eingesetzt. Beispielhaft handelt es sich bei den C$_1$-C$_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure. Bevorzugt werden als monofunktionelle Startersubstanzen Fettalkohole und Fettsäuren eingesetzt.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanz kann auch aus der Substanzklasse der Polyetherpolyole ausgewählt sein, die ein zahlenmittleres Molekulargewicht M$_n$ im Bereich von 18 bis 4500 g/mol und eine Funktionalität von 2 bis 3 aufweisen. Das zahlenmittlere Molekulargewicht M$_n$ wird gemäß DIN 55672-1 (August 2007) gemessenen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3, Polyetherpolyole mit einem Molekulargewicht $M_n$ im Bereich von 150 bis 8000 g/mol und einer Funktionalität von 2 bis 3, Fettsäuren und Fettalkohole.

Katalysator

Als geeignete Katalysatoren für die Anlagerung von cyclischen Carbonat an H-funktionelle Startersubstanzen werden Katalysatoren gemäß Formel (I) eingesetzt

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $SnO_3^{2-}$, $CO_3^{2-}$, $PO_4^{3-}$, $RCOO^-$, $VO_3^-$, $WO_4^{2-}$, $MoO_4^{2-}$ und $VO_4^{3-}$,
n ist 1, wenn X = $VO_3^-$, $RCOO^-$
n ist 2, wenn X = $SnO_3^{2-}$, $CO_3^{2-}$, $WO_4^{2-}$ oder $MoO_4^{2-}$
n ist 3, wenn X = $PO_4^{3-}$ oder $VO_4^{3-}$,
R ein organischer Rest ist.

Das Anion X des Katalysators ist bevorzugt $VO_3^-$, $VO_4^{3-}$ oder $PO_4^{3-}$. Als Alkalimetallkation M wird bevorzugt $Na^+$ oder $K^+$ eingesetzt. Ganz besonders bevorzugt wird als Katalysator eine Verbindung ausgewählt aus der Gruppe bestehen aus $Na_3VO_4$, $K_3VO_4$, $NaVO_3$, $KVO_3$, $Na_3PO_4$ und $K_3PO_4$ eingesetzt. Der organische Rest R kann ein gesättigter oder ungesättigter, linearer oder verzweigter, aliphatischer oder cycloaliphatischer oder einen aromatischen oder araliphatischen Rest sein, der gegebenenfalls Heteroatome, wie N, S oder O enthalten kann. Bevorzugt handelt es sich bei dem organischen Rest R um einen C1 bis C12-Alkylrest, besonders bevorzugt handelt es sich um einen Methylrest.

Die nach dem erfindungsgemäßen Verfahren erhaltenen Polyethercarbonatalkohole können beispielsweise durch Umsetzung mit Di- und/oder Polyisocyanaten zu Polyurethanen weiterverarbeitet werden.

Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Emulgatoren, Dispergiermittel, Schmiermitteln, Prozesschemikalien für die Papier- oder Textilherstellung, medizinische Anwendungen, Wirkstofffreisetzung, kosmetischen Formulierungen, wie beispielsweise in Haut- oder Sonnenschutzcreme oder Haarpflegeprodukten zu finden.

**Experimenteller Teil**

Experimentell ermittelte OH-Zahlen wurden gemäß der Vorschrift DIN 53240-2 (November 2007) bestimmt.

Der Anteil an eingebautem $CO_2$ im resultierenden Polyethercarbonatalkohol ($CO_2$-Gehalt) wurden mittels $^1$H-NMR Spektroskopie (Firma Bruker, AV III HD 600, 600 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR Spektrum (bezogen auf TMS = 0 ppm) sind wie folgt:

Für verbleibendes monomeres Ethylencarbonat (Signal bei 4,53 ppm) Resultierend aus im Polyethercarbonatalkohol eingebautem Kohlendioxid (Resonanzen bei 4,37-3,21 und ggf. 4,19-4,07 ppm - abhängig vom gewählten Startermolekül), Polyetherpolyol (d.h. ohne eingebautem Kohlendioxid) mit Resonanzen bei 3,80-3,55 ppm.

Der Molenanteil des im Polymer eingebauten Carbonats in der Reaktionsmischung wird nach Formel (I) wie folgt berechnet, wobei folgende Abkürzungen verwendet werden:

F(4,53) = Fläche der Resonanz bei 4,53 ppm für cyclisches Carbonat (entspricht vier Protonen)

F(4,37-4,21) = Fläche der Resonanz bei 4,37-4,21 ppm für Polyethercarbonatalkohol.

F(4,19-4,07) = Fläche der Resonanz bei 4,19-4,07 ppm for Polyethercarbonatalkohol (Die Summe von F(4,37-4,21) und F(4,19-4,07) entspricht 4 Protonen)

F(3,8-3,55) = Fläche der Resonanz bei 3,8-3,55 ppm für Polyetherpolyol (entspricht 4 Protonen)

Unter Berücksichtigung der relativen Intensitäten wurde gemäß der folgenden Formel (I) für das polymer gebundene Carbonat ("lineares Carbonat" LC) in der Reaktionsmischung in Gew.-% berechnet:

$$LC_{gew.\%} = \frac{[F(4,37-4,21)+F(4,19-4,07)] \cdot 88}{N} \cdot 100\ \% \qquad (I)$$

wobei sich der Wert für $N$ ("Nenner" $N$) nach Formel (III) berechnet:

$$N = [(4,37-4,21) + F(4,19-4,07)] \cdot 88 + F(3,8-3,55) \cdot 44 \qquad (II)$$

Der Faktor 88 resultiert aus der Summe der Molmassen von $CO_2$ (Molmasse 44 g/mol) und der von Ethylenoxid (Molmasse 44 g/mol), der Faktor 44 resultiert aus der Molmasse von Ethylenoxid.

Der Gewichtsanteil (in Gew.-%) an $CO_2$ im Polyethercarbonatalkohol wurde nach Formel (III) berechnet:

$$CO_{2\,gew.\%} = LC_{gew.\%} \cdot \frac{44}{88} \qquad (III)$$

Um aus den Werten der Zusammensetzung der Reaktionsmischung die Zusammensetzung bezogen auf den Polymer-Anteil (bestehend aus Polyethercarbonatalkohol, aufgebaut aus Starter, cyclischem Ethylencarbonat), wurden die Nicht-Polymer-Bestandteile der Reaktionsmischung (d.h. nicht umgesetztes cyclisches Ethylencarbonat) rechnerisch eliminiert. Der Gewichtsanteil der Carbonat-Wiederholungseinheiten im Polyethercarbonatalkohol wurde in einen Gewichtsanteil Kohlendioxid mittels des Faktors F=44/(44+44) umgerechnet (Siehe Formel III). Die Angabe des $CO_2$-Gehalts im Polyethercarbonatalkohol ("eingebautes $CO_2$"; siehe nachfolgende Beispiele) ist normiert auf das Polyethercarbonatalkohol-Molekül, das bei der ringöffnenden Polymerisation entstanden ist.

Der Umsatz der Reaktionslösung wird nach Formel (IV) wie folgt berechnet, wobei folgende Abkürzungen verwendet werden (exemplarisch dargestellt für 1,6-Hexandiol als H-funktionelle Startersubstanz, für alternative Starter wurde die Berechnung entsprechend angepasst):

F(1.78 - 1.29) = Normierte Fläche der Resonanz bei 1.78 - 1.29 ppm für 1,6-Hexandiol (definiert als 8 Protonen)

F(4.36 - 3.20) = Normierte Fläche der Resonanz bei 4.36 - 3.20 ppm für Polyethercarbonatalkohol und 1,6-Hexandiol (verbleibende 4 Protonen).

Aus dem Verhältnis von H-funktioneller Startersubstanz (z.B. 1,6-Hexandiol: 12 H) zu Monomer ergibt sich, dass 31,57 Protonen aus cEC im Reaktionsgemisch vorliegen (Stoffmengenverhältnis von $n$(cEC)/$n$(1,6-HD) = 7.89).

Unter Berücksichtigung der relativen Intensitäten wurde gemäß der folgenden Formel (IV) der Umsatz berechnet:

$$Umsatz_{mol\%} = \frac{F(4.36 - 3.20) - \frac{F(1.78 - 1.29)}{2}}{31{,}57} \cdot 100\,\% \qquad (IV)$$

Eingesetzte Rohstoffe:

Alle aufgezählten Chemikalien wurden vom genannten Hersteller in der angegebenen Reinheit erworben und ohne weitere Behandlung für die Synthese von Polyethercarbonatalkoholen verwendet.

| | |
|---|---|
| Cyclisches Ethylencarbonat (cEC): | Sigma-Aldrich 99 % |
| $K_3PO_4$: | Sigma-Aldrich |
| 1,1,1-Trimethylolpropan (TMP): | Acros Organics B.V.B.A. (BE) |
| o-Dichlorbenzol: | Sigma-Aldrich |

Beispiel 1: Verwendung eines Strömungsrohrreaktors **(PFR) mit dem Ziel** von **80%** Umsatz

Ein 137 mL Strömungsrohrreaktor (mit einem inneren Durchmesser von 2,1 mm) ausgestattet mit einer Schlauchquetschpumpe wurde mit 10 mL/min. Stickstoff für 30 Minuten inertisiert. Anschließend wurde die Suspensionsdosierung mit 87.6 Gew.% cyclisches Ethylencarbonat, 9.8 Gew.% TMP und 2.6 Gew.% $K_3PO_4$ (bei 80 °C) durch das auf 170 °C beheizte Reaktionsgefäß gestartet mit einer Flussrate von 0,40 mL/min.

Die Reaktionsmischung wird hinter dem Überlauf in einem Auffanggefäß gesammelt, wobei $CO_2$ entweicht. Nachdem eine stationäre Konzentrationen im Rohrreaktor erreicht worden ist, wird eine Probe gezogen und analysiert (s. Tabelle 1).

**Beispiel 2 (Vergleich): Verwendung eines kontinuierlichen Rührkessels (CSTR) mit dem Ziel von 80% Umsatz**

Ein 500 mL Vierhalsglaskolben mit Überlauf (450 mL Maximalvolumen) wurde mit Rückflusskühler, Rührfisch, Thermofühler, Stickstoffzuleitung und Gasaustritt/Gasabfuhr mit Überdruckventil ausgestattet. 450 mL o-Dichlorbenzol wurden in den Reaktionskolben vorgelegt. Für 30 Minuten wurden 10 L/h Stickstoff eingeleitet, der Rührer auf 800 U/min eingestellt und auf 170 °C aufgeheizt. Anschließend wurde die Suspensionsdosierung von 87.6 Gew.% cyclisches Ethylencarbonat, 9.8 Gew.% TMP und 2.6 Gew.% $K_3PO_4$ (bei 80 °C) in das Reaktionsgefäß mit 4.12 mL/min gestartet. Der entstehende Gasstrom wurde durch den Rückflusskühler und einen Blasenzähler abgelassen.

Die Reaktionsmischung wird hinter dem Überlauf in einem Auffanggefäß gesammelt. Nachdem stationäre Konzentrationen im Rührkessel erreicht worden sind wird eine Probe gezogen und analysiert (s. Tabelle 1).

**Beispiel 3: Verwendung eines Strömungsrohrreaktors (PFR) mit dem Ziel von 90% Umsatz**

Das Verfahren wurde analog zum Beispiel 1 durchgeführt, wobei die Flussrate auf 0,265 mL/min eingestellt wurde.

**Beispiel 4 (Vergleich) : Verwendung eines kontinuierlichen Rührkessels (CSTR) mit dem Ziel von 90% Umsatz**

Das Verfahren wurde analog zum Beispiel 3 durchgeführt, wobei die Flussrate auf 3,22 mL/min eingestellt wurde.

**Tabelle 1: Übersicht über die Versuchsergebnisse**

| Beispiel | Umsatz (Ziel) [%] | Reaktor | Umsatz (NMR) [%] | Gew.% $CO_2$ |
|---|---|---|---|---|
| 1 | 80 | PFR | 79,8 | 18,1 |
| 2* | | CSTR | 82,3 | 12,8 |
| 3 | 90 | PFR | 91,9 | 16,0 |
| 4* | | CSTR | 89,4 | 8,4 |
| *Vergleichsbeispiel | | | | |

In den Beispielen 1 bis 4 wurden mittels kontinuierlicherer Verfahren Polyethercarbonatalkohole hergestellt. Die Verfahren in den Beispielen 1 und 3 wurden erfindungsgemäß mit einem Rohrreaktor (PFR) durchgeführt und die Beispiele 2 und 4 mit einem kontinuierlichen Rührkessel (CSTR). Der Umsatz der Edukte zu einem Polyethercarbonatalkohol entspricht jeweils den angestrebten Werten von 80% (Beispiele 1 und 2) bzw. 90% (Beispiele 3 und 4). Bei den erfindungsgemäßen Verfahren mit einem Rohrreaktor werden jedoch Polyethercarbonatalkohole mit deutlich höheren Anteilen an $CO_2$-Einheiten im Polyethercarbonatalkohol erhalten als bei den Vergleichsbeispielen 2 und 4.

**Patentansprüche**

1. Verfahren zur Herstellung von Polyethercarbonatalkoholen durch Anlagerung von cyclischen Carbonaten an eine H-funktionelle Starterfunktion in Anwesenheit eines Katalysators gemäß der Formel

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $SnO_3^{2-}$, $CO_3^{2-}$, $PO_4^{3-}$, $RCOO^-$, $VO_3^-$, $WO_4^{2-}$, $MoO_4^{2-}$ und $VO_4^{3-}$,
n ist 1, wenn $X = VO_3^-$, $RCOO^-$,
n ist 2, wenn $X = SnO_3^{2-}$, $CO_3^{2-}$, $WO_4^{2-}$ oder $MoO_4^{2-}$,
n ist 3, wenn $X = PO_4^{3-}$ oder $VO_4^{3-}$,
R ein organischer Rest ist, bevorzugt C1 bis C12-Alkylrest,
**dadurch gekennzeichnet, dass** die Anlagerung in einem Rohrreaktor durchgeführt wird.

2. Verfahren gemäß Anspruch 1, **dadurch gekennzeichnet, dass**

(i) der Katalysator in H-funktionellen Startersubstanz und cyclischen Carbonat suspendiert wird,
(ii) die aus (i) resultierende Suspension in einem Rohrreaktor bei einer Temperatur von 140 bis 200 °C zur Reaktion gebracht wird.

3. Verfahren gemäß Anspruch 1 oder 2, **dadurch gekennzeichnet, dass** der Rohrreaktor aus einem durchgängigen Stück Rohr aufgebaut ist.

4. Verfahren gemäß der Anspruch 1 oder 2, **dadurch gekennzeichnet, dass** der Rohrreaktor aus mindestens zwei aneinandergefügten Rohren aufgebaut ist.

5. Verfahren gemäß einem der Ansprüche 1 bis 4, **dadurch gekennzeichnet, dass** der Rohrreaktor Einbauten aufweist, bevorzugt statische Mischer oder eine Kombination aus statischen Mischern und Wärmetauschern.

6. Verfahren gemäß einem der Ansprüche 1 bis 5, **dadurch gekennzeichnet, dass** ein erstes Teilstück des Rohrreaktors dünner ist ein zweites anschließendes Teilstück.

7. Verfahren gemäß Anspruch 6, **dadurch gekennzeichnet, dass** das erste Teilstück eine Länge von 20 bis 60% der Länge des Rohrreaktors und einen inneren Durchmesser von 1,1 mm bis < 150 mm aufweist und das zweite Teilstück eine Länge von 80 bis 40 % der Länge des Rohrreaktors und einen inneren Durchmesser von 150 mm bis 500 mm aufweist.

8. Verfahren gemäß einem der Ansprüche 1 bis 7, **dadurch gekennzeichnet, dass** der Rohrreaktor ein Verhältnis von Rohrlänge L zu Rohrdurchmesser dR von L/ dR > 50 aufweist.

9. Verfahren gemäß einem der Ansprüche 1 bis 8, **dadurch gekennzeichnet, dass** in Formel (I) M ausgewählt ist aus den Alkalimetallkationen $Na^+$ oder $K^+$.

10. Verfahren gemäß einem der Ansprüche 1 bis 8, **dadurch gekennzeichnet, dass** in Formel (I) X ausgewählt ist aus den Anionen $PO_4^{3-}$, $VO^{3-}$ oder $VO_4^{3-}$.

11. Verfahren gemäß einem der Ansprüche 1, bis 10 **dadurch gekennzeichnet, dass** als Katalysator eine Verbindung ausgewählt aus der Gruppe bestehend aus $Na_3VO_4$, $K_3VO_4$, $NaVO_3$, $KVO_3$, $Na_3PO_4$ und $K_3PO_4$ eingesetzt wird.

12. Verfahren gemäß einem der Ansprüche 1 bis 11, **dadurch gekennzeichnet, dass** als cyclisches Carbonat Propylencarbonat, Ethylencarbonat oder eine Mischung aus Propylencarbonat und Ethylencarbonat eingesetzt wird.

13. Verfahren gemäß einem der Ansprüche 1 bis 12, **dadurch gekennzeichnet, dass** die H-funktionelle Startersubstanz ein nach DIN 55672-1 (August 2007) gemessenes zahlenmittleres Molekulargewicht bis 10.000 g/mol, bevorzugt bis 5.000 g/mol, besonders bevorzugt bis 2.500 g/mol aufweist.

14. Verfahren gemäß einem der Ansprüche 1 bis 13, **dadurch gekennzeichnet, dass** die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem nach DIN 55672-1 (August 2007) gemessenen zahlenmittleren Molekulargewicht $M_n$ im Bereich von 150 bis 8000 g/mol bei einer Funktionalität von 2 bis 3, Polyetherpolyole mit einem nach DIN 55672-1 (August 2007) gemessenen zahlenmittleren Molekulargewicht $M_n$ im Bereich von 150 bis 8000 g/mol und einer Funktionalität von 2 bis 3, Fettsäuren und Fettalkohole.

15. Verfahren gemäß einem der Ansprüche 1 bis 14, **dadurch gekennzeichnet, dass** der Katalysator in einem Anteil von 10 bis 50000 ppm, besonders bevorzugt 20 bis 40000 ppm und höchst bevorzugt 50 bis 30000 ppm vorliegt.

FIG. 1

FIG. 2

Europäisches Patentamt

European Patent Office

Office européen des brevets

**EUROPÄISCHER RECHERCHENBERICHT**

Nummer der Anmeldung

EP 21 15 5431

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2016/001206 A1 (COVESTRO DEUTSCHLAND AG [DE]) 7. Januar 2016 (2016-01-07) * Beispiel 1 * * Seite 1 * * Seite 2 * * Seite 9 * * Seite 18 * ----- | 1-15 | INV. C08G64/30 C08G65/26 |
| A | ROBERT F. HARRIS: "Structural features of poly(alkylene ether carbonate) diol oligomers by capillary gas chromatography", JOURNAL OF APPLIED POLYMER SCIENCE, Bd. 37, Nr. 1, 5. Januar 1989 (1989-01-05) , Seiten 183-200, XP055622074, US ISSN: 0021-8995, DOI: 10.1002/app.1989.070370114 * Seite 184; Beispiel Sample 1; Tabelle 1 * ----- | 1-15 | |

RECHERCHIERTE SACHGEBIETE (IPC)

C08G
C09J

Der vorliegende Recherchenbericht wurde für alle Patentansprüche erstellt

| Recherchenort | Abschlußdatum der Recherche | Prüfer |
|---|---|---|
| Den Haag | 5. Juli 2021 | Adigbli, Francis |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 5431

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2021

| Im Recherchenbericht angeführtes Patentdokument | Datum der Veröffentlichung | Mitglied(er) der Patentfamilie | Datum der Veröffentlichung |
|---|---|---|---|
| WO 2016001206 A1 | 07-01-2016 | CN 106471040 A | 01-03-2017 |
| | | EP 3164442 A1 | 10-05-2017 |
| | | ES 2699843 T3 | 13-02-2019 |
| | | KR 20170029534 A | 15-03-2017 |
| | | SG 11201610701T A | 27-01-2017 |
| | | US 2017137569 A1 | 18-05-2017 |
| | | WO 2016001206 A1 | 07-01-2016 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0343572 A
- EP 19192407
- EP 19192409
- EP 1359177 A

**In der Beschreibung aufgeführte Nicht-Patentliteratur**

- **R.F. HARRIS.** *Journal of Applied Polymer Science,* 1989, vol. 37, 183-200